# EUROPÄISCHE PATENTSCHRIFT

(11) **EP 2 332 864 B1**
(45) Veröffentlichungstag und Bekanntmachung des Hinweises auf die Patenterteilung: **16.05.2012**
(21) Anmeldenummer: 10015352.7
(22) Anmeldetag: 07.12.2010
(51) Int. Cl.: B65G 47/244, B42C 19/08

(54) **Vorrichtung zum Drehen von Buchblocks, Büchern o. dgl. Druckprodukten**
Device for rotating book blocks, books or similar printed products
Dispositif destiné à tourner des blocs de livres, des livres ou des produits d'impression analogues

(30) Priorität: 12.12.2009 DE 102009058149
(43) Veröffentlichungstag der Anmeldung: 15.06.2011
(73) Patentinhaber: Kolbus GmbH & Co. KG, 32369 Rahden (DE)
(72) Erfinder: Gerke, Klaus, 27211 Bassum (DE); Grewe, Harald, 32369 Rahden (DE); Tautz, Frank, 32369 Rahden (DE)

(56) Entgegenhaltungen:
- EP-A1- 1 491 467
- JP-A- 61 155 118

## Beschreibung

Die Erfindung betrifft eine Vorrichtung zum Drehen von Buchblocks, Büchern o. dgl. Druckprodukten gemäß dem Oberbegriff des Anspruchs 1.

Eine Drehvorrichtung der eingangs genannten Art wird in der industriellen Buchbinderei überall dort eingesetzt, wo Buchblocks oder Bücher mit einer bestimmten Ausrichtung von einer Bearbeitungsstation zu einer nachgeordneten Bearbeitungsstation überführt werden sollen, an der eine andere Ausrichtung der Druckprodukte erforderlich bzw. zweckmäßig ist. Um beispielsweise Bücher in Stapeleinrichtungen abwechselnd um 180° gedreht aufeinander stapeln zu können, werden die Bücher je nach Ausrichtung, mit der die Bücher zugeführt werden, um 0°, 90° oder 180° gedreht.

In der DE 19810112 A1 ist eine Vorrichtung zum taktsynchronen Einschleusen von aus einer Vormaschine beliebig aufeinander folgend zugeführten Büchern in eine gattungsgemäße, die Bücher mittig erfassende Drehvorrichtung beschrieben. Die Klemm-Dreh-Einheit aus Drehteller und Dreh-Druckstempel ist zwischen zwei parallelen Förderriemen vor und zurück verfahrbar.

Bei einer bekannten, eine solche Dreheinrichtung aufweisenden Stapeleinrichtung [Kolbus DS 391] werden bei synchroner Verfahrgeschwindigkeit taktgenau eingeschleuste Bücher jeweils durch den Drehteller von den Förderriemen abgehoben und gegen den von einem Pneumatikzylinder zeitgleich nach unten bewegten Dreh-Druckstempel gedrückt, wobei durch den federnd nachgiebigen Pneumatikzylinder die Bücher kraftschlüssig eingespannt sind. Die Bücher werden um +90°, -90° oder 180° gedreht und bei ebenfalls synchroner Geschwindigkeit wieder auf den Förderriemen abgelegt. Die jeweils durchzuführende Drehbewegung erfolgt mit einem ortsfest angeordneten Servomotor, der über eine Gelenkwelle mit dem vor- und zurückfahrenden Drehteller antriebsverbunden ist. Die Verbindung mit einer Gelenkwelle ist verschleiß- und spielbehaftet und erfordert eine entsprechende Wartung.

Aus der DE 19758732 B4 ist eine Drehvorrichtung bekannt, bei der der obere und der untere Drehstempel separate, über eine elektronische Welle miteinander synchronisierte Drehantriebe aufweisen, wobei die Drehantriebe auf der zwischen einer Übernahmeposition und einer Abgabeposition hin- und herbewegten Klemm-Dreh-Einheit angeordnet sind. Das Gewicht der Klemm-Dreh-Einheit ist aufgrund dieser Anordnung relativ hoch und begrenzt dessen Dynamik in der Vor- und Rückbewegung, sodass die max. Taktleistung der Drehvorrichtung eingeschränkt ist. Die auf der bewegten Klemm-Dreh-Einheit angeordneten Drehantriebe erfordern eine aufwendige Leitungsverbindung über Energieketten, die laute Laufgeräusche und einen hohen Verschleiß aufweisen können.

Der Erfindung liegt die Aufgabe zugrunde, eine Vorrichtung zum Drehen von Buchblocks, Büchern o. dgl. Druckprodukten gemäß dem Oberbegriff des Anspruchs 1 zu schaffen, die bei einfacher, wartungsarmer Konstruktion eine hohe Taktleistung ermöglicht.

Diese Aufgabe wird erfindungsgemäß dadurch gelöst, dass die Drehbewegung des Drehtellers und/oder Dreh-Druckstempels von einem ortsfest angeordneten, über ein in Richtung der Vor- und Rückbewegung der Klemm-Dreh-Einheit bewegbares Übertragungsmittel mit einem Rad der Klemm-Dreh-Einheit antriebsverbundenen Antrieb aus erfolgt, wobei die durch die Vor- und Rückbewegung der Klemm-Dreh-Einheit zwangsweise erzeugte Drehbewegung am Drehteller und/oder Dreh-Druckstempel durch eine vom Antrieb erzeugte Komplementärbewegung kompensierbar ist.

Dadurch dass der Antrieb ortsfest angeordnet ist, kann die vor und zurückbewegte Klemm-Dreh-Einheit zur Erreichung einer hohen Dynamik und damit hohen Taktleistung sehr leicht gebaut werden. Anschlussleitungen können fest verlegt werden. Der Aufbau der Klemm-Dreh-Einheit kann übersichtlich und gut zugänglich gestaltet werden. Die Übertragung erfolgt direkt auf ein Rad der Klemm-Dreh-Einheit, wodurch große Drehbewegungen (z.B. 180°) am Drehteller und/oder Dreh-Druckstempel realisierbar sind, ohne dass dafür eine weitere Übersetzung in der Klemm-Dreh-Einheit erforderlich ist. Der gesamte Antriebsstrang ist dadurch besonders steif und das Gewicht der Klemm-Dreh-Einheit kann weiter reduziert werden. Spiel- und Verschleißbehaftete Gelenk- und/oder Keilwellen oder massebehaftete Koppelstangen kommen zur Einleitung der Drehbewegung nicht zum Einsatz.

In bevorzugter Weiterausgestaltung ist der ortsfest angeordnete Antrieb ein Servomotor, der über eine Steuereinrichtung mit dem Antrieb für d e Vor- und Rückbewegung der Klemm-Dreh-Einheit steuerbar verbunden ist. Die Komplementärbewegung kann elektronisch hinterlegt und/oder in Abhängigkeit von der jeweiligen, ggf. in Hublage und -länge variierenden Vor- und Rückbewegung definiert sein. Die wahlweise Drehbewegung von 0°, +90°, -90° oder 180° wird dabei dieser Komplementärbewegung einfach elektronisch überlagert.

Vorzugsweise ist der ortsfest angeordnete Antrieb ein Servomotor mit Lageregelung, wobei die Lage des Drehtellers und/oder Dreh-Druckstempel nach der jeweiligen Drehfunktion direkt geregelt ist. Die Lageregelung folgt der Drehvorgabe von wahlweise 0°, +90°, - 90° oder 180° und kompensiert dabei die aufgrund der Vor- und Rückbewegung erzeugte Drehbewegung.

In bevorzugter Weiterausgestaltung ist vorgesehen, dass das Übertragungsmittel ein Zahnriemen o. dgl. endlos umlaufendes Zugmittel ist, wobei zumindest das an dem besagten Rad wirkende Trum des Zugmittels in Richtung der Vor- und Rückbewegung der Klemm-Dreh-Einheit verläuft. Zahnriemen o. dgl. Zugmittel sind kostengünstige Übertragungsmittel und zudem sehr wartungsarm.

Weitere bevorzugte Ausbildungsformen der Erfindung sind in den weiteren abhängigen Ansprüchen angegeben.

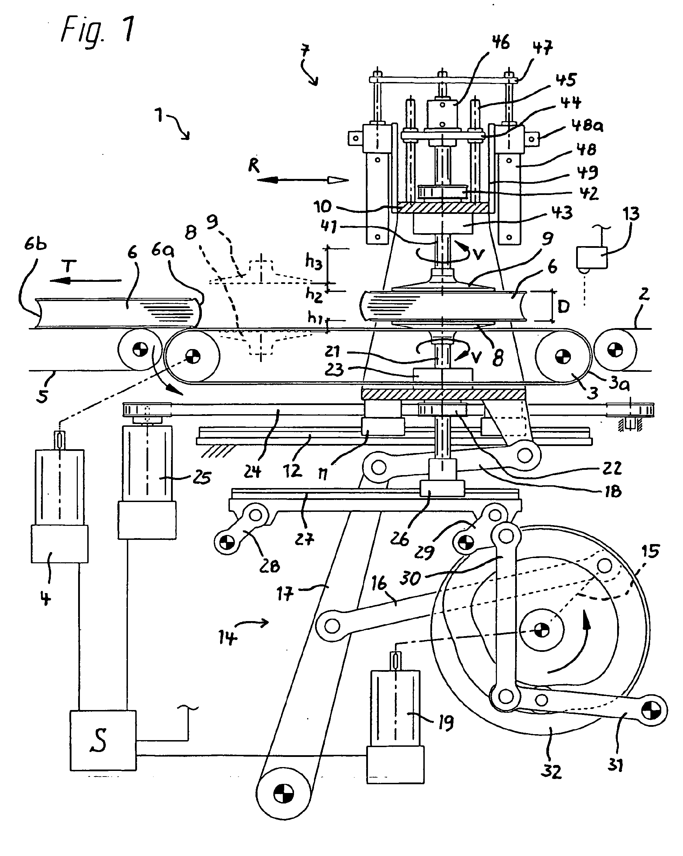

Die Merkmale der vorliegenden Erfindung werden in der folgenden Beschreibung einer bevorzugten Ausführungsform anhand der beigefügten Zeichnung erläutert. Es zeigen
- **Fig. 1**: eine Drehvorrichtung in einer teilweise schematisierten seitlichen Schnittansicht;

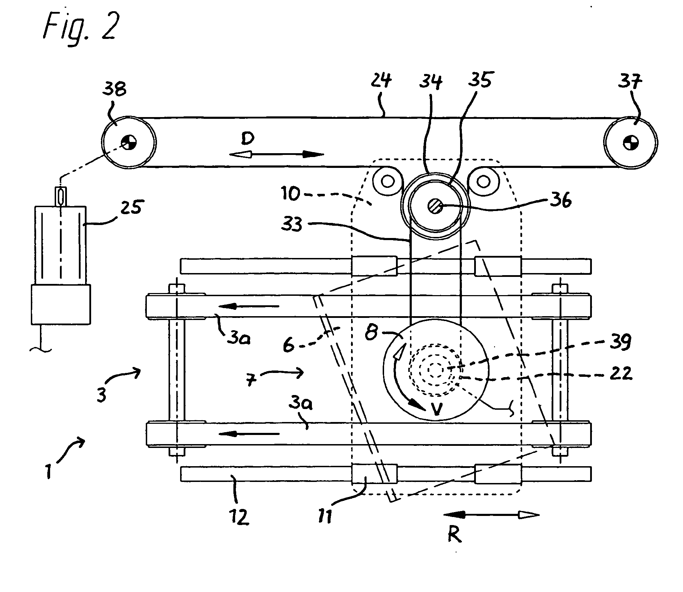

- **Fig. 2**: eine Draufsicht von dem Antrieb für die Klemm-Dreh-Einheit.

Die Drehvorrichtung 1 weist eine Klemm-Dreh-Einheit 7 auf, bestehend aus einem unteren, ein flach aufliegendes Buch 6 von einer Fördereinrichtung 3 abhebenden Drehteller 8 und einem oberen, heb- und senkbaren Dreh-Druckstempel 9, zwischen denen das Buch 6 zum Drehen einspannbar ist.

Die Bücher 6 werden im Ausführungsbeispiel in ungefähr gleichen gegenseitigen Abständen mit vorlaufendem Rücken 6 a in einer Transportrichtung T von einem Zuführförderer 2 der Fördereinrichtung 3 zugeführt, ggf. um eine vertikale Achse gedreht, und abschließend an einen Wegförderer 5 übergeben, wobei nach erfolgter Drehung der Vorderschnitt 6 b voran läuft.

Die Klemm-Dreh-Einheit 7 befindet sich in einem Rahmen 10, welcher am unteren Ende mit Führungswagen 11 auf horizontalen Führungsschienen 12 verfahrbar geführt ist. Die Vor- und-Rückbewegung R des Rahmens 10 wird von einer Kurbelschwinge 14 erzeugt, bestehend aus einer an einer drehangetriebenen Kurvenscheibe 32 ausgebildeten Kurbel 15, einer Koppel 16 und einer Schwinge 17, an deren Ende über eine weitere Koppel 18 der Rahmen 10 angelenkt ist.

Die Kurvenscheibe 32 ist von einem Servomotor 19 angetrieben, welcher von einer Steuerung S derart gesteuert ist, dass die Klemm-Dreh-Einheit 7 - mittig zu einem jeweiligen von einem Sensor 13 erfassten Buch 6 ausgerichtet - zumindest beim Abheben wie auch beim Ablegen des Buches 6 synchron zur Förderbewegung der von einem Asynchronmotor 4 angetriebenen Fördereinrichtung 3 vorbewegt wird. Die Bücher 6 werden also bei kontinuierlicher Förderung produktschonend von der Fördereinrichtung 3 abgehoben, gedreht und wieder auf ihr abgelegt.

Der Drehteller 8 verfährt zwischen zwei parallelen Förderriemen 3 a der Fördereinrichtung 3 und ist an einem Ende einer Keilwelle 21 befestigt, welche in einer Zahnscheibe 22 vertikal verschieblich geführt ist. Die Zahnscheibe 22 selbst ist in einem am Rahmen 10 angeordneten Lagerflansch 23 drehgelagert und über einen Zahnriemen 33 mit einer Zahnscheibe 35 antriebsverbunden, die sich auf einer im Rahmen 10 drehgelagerten Welle 36 befindet, welche über eine weitere Zahnscheibe 34 von einem Zahnriemen 24 angetrieben ist.

Der von einem ortsfest angeordneten Servomotor 25 angetriebene Zahnriemen 24 läuft um im Gestell drehgelagerte Zahnscheiben 37, 38 um, wobei zumindest das an der Zahnscheibe 34 wirkende Trum in Richtung der Vor- und Rückbewegung R der Klemm-Dreh-Einheit 7 verläuft. Aufgrund dieser Anordnung kommt es bei stillstehendem Zahnriemen 24 bei der Vor- und Rückbewegung R der Dreh-Klemm-Einheit 7 zu einer zwangsweisen Drehbewegung des Drehtellers 8. Durch eine vom Servomotor 25 erzeugte Komplementärbewegung wird diese Drehbewegung kompensiert. Im Ausführungsbeispiel ist dazu der mit einem Drehgeber 39 versehene Drehteller 8 direkt lagegeregelt.

Für das wahlweise Drehen des Buches um 0°, +90°, -90° oder wie im Ausführungsbeispiel um 180° wird dem Zahnriemen 24 eine zusätzliche Bewegung eingeprägt, die sich mit der Komplementärbewegung zu einer entsprechenden Bewegung D des Zahnriemens 24 überlagert und den Drehteller 8 in die gewünschte Drehbewegung V versetzt, während die Klemm-Dreh-Einheit 7 nach vorne fährt.

Das Abheben des Buches 6 von der Fördereinrichtung 3 erfolgt mit einem festen Abhebehub h₁ des Drehtellers 8 von ca. 5 mm über die Förderebene. Das zweite Ende der Keilweile 21 ist in einem Führungswagen 26 drehgelagert, welcher auf einer auf und ab bewegbaren Führungsschiene 27 geführt ist. Diese ist an zwei gleich langen Lenkern 28, 29 angelenkt, wobei an dem als Doppellenker 29 ausgebildeten Lenker eine Koppel 30 angreift, welche am anderen Ende mit einem von der Kurvenscheibe 32 gesteuerten Kurvenhebel 31 verbunden ist.

Während der Vorbewegung der Klemm-Dreh-Einheit 7 wird der Drehteller 8 von der parallel zu sich selbst nach oben bewegbaren Führungsschiene 27 um den Abhebehub h₁ angehoben und zum Ende der Vorbewegung wieder abgesenkt. Während der Rückbewegung der Klemm-Dreh-Einheit 7 verbleibt der Hubteller 8 in abgesenkter Stellung. Soll ein Buch 6 ungedreht von der Fördereinrichtung 3 transportiert werden, so wird die Vor- und Rückbewegung R der Klemm-Dreh-Einheit 7 in einer Phase angehalten, in der sich der Drehteller 8 in abgesenkter Stellung unter der Förderebene der Fördereinrichtung 3 befindet, sodass das Buch 6 die Drehvorrichtung 1 ohne Einspannung in der Klemm-Dreh-Einheit 7 passiert.

Beim Drehen des in der Klemm-Dreh-Einheit 7 eingespannten Buches 6 ist der Dreh-Druckstempel 9 synchron zum Drehteller 8 drehangetrieben. Der Dreh-Druckstempel 9 ist wie der Drehteller 8 an einem Ende einer Keilwelle 41 befestigt, die in einer Zahnscheibe 42 vertikal verschieblich geführt ist. Die Zahnscheibe 42 ist einem Lagerflansch 43 drehgelagert und mit der unteren Zahnscheibe 22 über die Welle 36 antriebsverbunden, sodass die Drehbewegung V sowohl vom Drehteller 8 als auch vom Dreh-Druckstempel 9 auf das Buch 6 eingeleitet wird, wodurch insb. schwere, wabbelige Bücher 6 einwandfrei gedreht werden.

Zum Einspannen eines Buches 6 wird in zeitlicher Abstimmung mit der Abhebewegung des Drehtellers 8 der Dreh-Druckstempel 9 abgesenkt. Die Keilwelle 41 ist am zweiten Ende an einem über Führungsstangen 45 vertikal verschieblichen Steg 44 drehgelagert abgestützt. Mittels eines Pneumatikzylinders 46 als erstes Antriebsmittel wird der Steg 44 und damit der Dreh-Druckstempel 9 relativ zu einem in der Höhenposition entsprechend der Buchdicke D festsetzbaren Steg 47 um einen vergleichsweise kleinen Klemmhub h₂ von 5 bis 30 mm zum Einspannen des Buches 6 abgesenkt und zur Freigabe wieder angehoben.

Die Höhenposition des Stegs 47 und damit die Einstellung der Buchdicke D wird an einem Referenz-Buch automatisch festgelegt. Das Referenz-Buch, bspw. das erste einer zu verarbeitenden Serie von gleichen Büchern 6, wird zu einer Stelle im stromaufwärtigen Bereich der Fördereinrichtung 3 gefördert und unter der Klemm-Dreh-Einheit 7 positioniert, ohne dass es von dem Drehteller 8 von der Fördereinrichtung 3 abgehoben wird. Der Steg 47 ist von zwei, mit Laschen 49 am Rahmen 10 befestigten Pneumatikzylindern 48 in einer maximalen Höhenposition angehoben, während der Dreh-Druckstempel 9 vom Pneumatikzylinder 46 abgesenkt ist.

Der Dreh-Druckstempel 9 wird nun von den beiden Pneumatikzylindern 48 mit einem Stellhub h₃ abgesenkt, bis er auf das Referenz-Buch trifft. Der Gesamtarbeitsdruck der beiden Pneumatikzylinder 48 ist dabei kleiner als der Arbeitsdruck des ausgefahrenen Pneumatikzylinders 46. Die sich dadurch ergebene Höhenposition des Stegs 47 wird festgesetzt, indem die Kolbenstangen in den beiden Pneumatikzylindern 48 durch Feststelleinheiten 48 a festgeklemmt werden.

Die Dreheinrichtung 1 kann einer Stapeleinrichtung für Bücher 6 vorgeordnet sein, in der die Bücher 6 abwechselnd um 180° gedreht aufeinander gestapelt werden. Bei Kopf oder Fuß voran zugeführten Büchern 6 werden diese abwechselnd um +90° und -90° gedreht. Bei Vorderschnitt 6 b oder, wie im Ausführungsbeispiel, Rücken 6 a voran zugeführten Büchern 6 werden die Bücher 6 abwechselnd ungedreht und um 180° gedreht übergeben. Die Dreheinrichtung 1 kann auch in Maschinenverkettungen zum Einsatz kommen, in der Buchblocks oder Bücher 6 in einer anderen Orientierung der nächsten Verarbeitungsmaschine zugeführt werden müssen. Dann wird jedes Buch 6 in gleicher Weise gedreht.

## Patentansprüche

1. Vorrichtung zum Drehen von mit einer Fördereinrichtung (3) flach aufliegend transportierten Buchblocks, Büchern (6) o. dgl. Druckprodukten,
- mit einer zwischen Förderriemen (3 a) der Fördereinrichtung (3) vor und zurück verfahrbaren, ein jeweiliges Druckprodukt (6) mittig erfassenden Klemm-Dreh-Einheit (7) zum wahlweisen Drehen um eine vertikale Achse, bestehend aus
- einem unteren, vertikal verfahrbaren, das Druckprodukt (6) von der Fördereinrichtung (3) abhebenden Drehteller (8),
- und einem oberen, auf Produktdicke (D) einstellbaren Dreh-Druckstempel (9), **dadurch gekennzeichnet,**
**dass** die Drehbewegung des Drehtellers (8) und/oder Dreh-Druckstempels (9) von einem ortsfest angeordneten, über ein in Richtung der Vor- und Rückbewegung (R) der Klemm-Dreh-Einheit (7) bewegbares Übertragungsmittel (24) mit einem Rad (34) der Klemm-Dreh-Einheit (7) antriebsverbundenen Antrieb (25) aus erfolgt,
wobei die durch die Vor- und Rückbewegung (R) der Klemm-Dreh-Einheit (7) zwangsweise erzeugte Drehbewegung am Drehteller (8) und/oder Dreh-Druckstempel (9) durch eine vom Antrieb (25) erzeugte Komplementärbewegung kompensierbar ist.

2. Vorrichtung nach Anspruch 1, **dadurch gekennzeichnet, dass** der ortsfest angeordnete Antrieb ein Servomotor (25) ist, der über eine Steuereinrichtung (S) mit dem Antrieb (19) für die Vor- und Rückbewegung (R) der Klemm-Dreh-Einheit (7) steuerbar verbunden ist.

3. Vorrichtung nach Anspruch 1 oder 2, **dadurch gekennzeichnet, dass** der ortsfest angeordnete Antrieb ein Servomotor (25) mit Lageregelung ist, wobei die Lage des Drehtellers (8) und/oder Dreh-Druckstempel (9) nach der jeweiligen Drehfunktion (0°, +/- 90°, 180°) direkt geregelt wird.

4. Vorrichtung nach einem der Ansprüche 1 bis 3, **dadurch gekennzeichnet, dass** das Übertragungsmittel ein Zahnriemen (24) o. dgl. endlos umlaufendes Zugmittel ist, wobei zumindest das an dem besagten Rad (34) wirkende Trum des Zugmittels (24) in Richtung der Vor- und Rückbewegung (R) der Klemm-Dreh-Einheit (7) verläuft.

5. Vorrichtung nach einem der Ansprüche 1 bis 4, **dadurch gekennzeichnet, dass** der Drehteller (8) und der Dreh-Druckstempel (9) über eine Antriebsverbindung (36) synchron angetrieben sind.

6. Vorrichtung nach einem der Ansprüche 1 bis 5, **dadurch gekennzeichnet, dass** die Klemm-Dreh-Einheit (7) zumindest bei der Übernahme und/oder bei der Abgabe des Druckprodukts (6) im Wesentlichen synchron zur Fördereinrichtung (3) angetrieben ist.

7. Vorrichtung nach einem der Ansprüche 1 bis 6, **dadurch gekennzeichnet, dass** die Vor- und Rückbewegung (R) der Klemm-Dreh-Einheit (7) von einem zugeführte Druckprodukte (6) im Einlauf der Fördereinrichtung (3) erfassenden Sensor (13) gesteuert ist, zur mittigen Aufnahme der Druckprodukte (6) in der Klemm-Dreh-Einheit (7).

## Claims

1. A device for rotating book blocks, books (6) or similar printed products that are transported by and flatly lie on a conveying device (3),
- with a clamping-rotating unit (7) for selectively rotating about a vertical axis, wherein this clamping-rotating unit can be displaced forward and backward between conveyor belts (3 a) of the conveying device (3) and centrally takes hold of one respective printed product (6), consisting of
- a lower rotary plate (8) that can be vertically displaced and lifts the printed product (6) off the conveying device (3),
- and an upper rotary ram (9) that can be adjusted to the product thickness (D),
**characterized in**
**that** the rotary motion of the rotary plate (8) and/or the rotary ram (9) is realized with a stationarily arranged drive (25) that is connected to and drives a wheel (34) of the clamping-rotating unit (7) via a transmitting means (24) that can be moved in the direction of the forward and backward motion (R) of the clamping-rotating unit (7),
wherein the rotary motion of the rotary plate (8) and/or the rotary ram (9) that inevitably results from the forward and backward motion (R) of the clamping-rotating unit (7) can be compensated with a complimentary motion generated by the drive (25).

2. The device according to Claim 1, **characterized in that** the stationarily arranged drive consists of a servomotor (25) that is controllably connected to the drive (19) for the forward and backward motion (R) of the clamping-rotating unit (7) via a control device (S).

3. The device according to Claim 1 or 2, **characterized in that** the stationarily arranged drive consists of a servomotor (25) with positioning control, wherein the position of the rotary plate (8) and/or the rotary ram (9) is directly controlled in accordance with the respective rotary function (0°, +/-90°, 180°).

4. The device according to one of Claims 1 to 3, **characterized in that** the transmitting means consists of a toothed belt (24) or a similar endlessly revolving traction mechanism, wherein at least the segment of the traction mechanism (24) that acts upon said wheel (34) extends in the direction of the forward and backward motion (R) of the clamping-rotating unit (7).

5. The device according to one of Claims 1 to 4, **characterized in that** the rotary plate (8) and the rotary ram (9) are synchronously driven via a drive connection (36).

6. The device according to one of Claims 1 to 5, **characterized in that** the clamping-rotating unit (7) is at least driven essentially synchronous with the conveying device (3) during the acceptance and/or during the delivery of the printed product (6).

7. The device according to one of Claims 1 to 6, **characterized in that** the forward and backward motion (R) of the clamping-rotating unit (7) is controlled by a sensor (13) that detects supplied printed products (6) in the inlet of the conveying device (3) in order to centrally accommodate the printed products (6) in the clamping-rotating unit (7).

## Revendications

1. Dispositif destiné à tourner des blocs de livres, des livres (6) ou des produits d'impression analogues transportés en étant posés à plat par un système de convoyage (3),
- avec une unité de serrage/rotation (7) déplaçable en aller et en retour entre des courroies de transport (3a) du système de convoyage (3) saisissant par son milieu un produit d'impression (6) concerné, pour la rotation au choix autour d'un axe vertical, composé
- d'un plateau tournant (8) inférieur, déplaçable à la verticale, relevant le produit d'impression (6) du système de convoyage (3),
- et d'un poinçon de rotation/de pression (9) réglable en fonction de l'épaisseur du produit (D),
**caractérisé en ce que**
le mouvement de rotation du plateau tournant (8) et/ou du poinçon de rotation/de pression (9) s'effectue à partir d'un entraînement (25) disposé de façon stationnaire, relié en entraînement par l'intermédiaire d'un moyen de transmission (24) avec une roue (34) de l'unité de serrage/rotation (7) mobile en direction du mouvement aller et retour (R) de l'unité de serrage/rotation (7),
le mouvement de rotation forcé créé par le mouvement aller et retour (R) de l'unité de serrage/rotation (7) étant compensable sur le plateau tournant (8) et/ou sur le poinçon de rotation/serrage (9) par un mouvement complémentaire créé par l'entraînement (25).

2. Dispositif selon la revendication 1, **caractérisé en ce que** l'entraînement placé de façon stationnaire est un servomoteur (25) qui par l'intermédiaire d'un système de commande (S) est relié de façon contrôlable avec l'entraînement (19) pour le mouvement aller et retour (R) de l'unité de serrage/rotation (7).

3. Dispositif selon la revendication 1 ou 2, **caractérisé en ce que** l'entraînement disposé de façon stationnaire est un servomoteur (25) avec réglage de position, la position du plateau tournant (8) et/ou du poinçon de rotation/pression (9) étant directement réglée selon la fonction de rotation concernée (0°, +/- 90°, 180°).

4. Dispositif selon l'une quelconque des revendications 1 à 3, **caractérisé en ce que** le moyen de transmission est une courroie dentée (24) ou un moyen de traction analogue à rotation sans fin, au moins le brin du moyen de traction (24) agissant sur la roue (34) citée s'étendant en direction du mouvement aller et retour (R) de l'unité de serrage/rotation (7).

5. Dispositif selon l'une quelconque des revendications 1 à 4, **caractérisé en ce que** le plateau tournant (8) et le poinçon de rotation/pression (9) sont entraînés de façon synchrone par l'intermédiaire d'une liaison par entraînement (36).

6. Dispositif selon l'une quelconque des revendications 1 à 5, **caractérisé en ce qu'**au moins lors de la reprise et/ou de la restitution du produit d'impression (6), l'unité de serrage/rotation (7) est entraînée de façon sensiblement synchrone au dispositif de convoyage (3).

7. Dispositif selon l'une quelconque des revendications 1 à 6, **caractérisé en ce que** le mouvement aller et retour (R) de l'unité de serrage/rotation (7) est commandé par un capteur (13) détectant des produits d'impression (6) amenés, à l'entrée du dispositif de convoyage (3) pour la reprise centrale des produits d'impression (6) dans l'unité de serrage/rotation (7).
